# EUROPÄISCHE PATENTSCHRIFT

(11) **EP 2 124 044 B1**
(45) Veröffentlichungstag und Bekanntmachung des Hinweises auf die Patenterteilung: **07.09.2011**
(21) Anmeldenummer: 08009323.0
(22) Anmeldetag: 20.05.2008
(51) Int. Cl.: G01N 27/90

(54) **Verfahren zum Bestimmen und Bewerten von Wirbelstromanzeigen, insbesondere von Rissen, in einem Prüfgegenstand aus einem elektrisch leitfähigen Material**
Method for calculating and evaluating eddy current displays, in particular cracks, in a test object made from a conductive material
Procédé de détermination et d'évaluation d'affichages du courant de Foucault, en particulier de fissures, dans un objet de test à partir d'un matériau électriquement conducteur

(43) Veröffentlichungstag der Anmeldung: 25.11.2009
(73) Patentinhaber: SIEMENS AKTIENGESELLSCHAFT, 80333 München (DE)
(72) Erfinder: Jungbluth, Matthias, Dr., 12681 Berlin (DE); Wilkenhöner, Rolf, Dr., 14532 Kleinmachnow (DE)

(56) Entgegenhaltungen:
- EP-A- 0 165 761
- DE-A1- 4 201 502
- US-A- 4 555 664

## Beschreibung

Die Erfindung betrifft ein Verfahren zum Erfassen und Auswerten von Wirbelstromsignalen in einem Prüfgegenstand aus einem elektrisch leitfähigen Material. Danbeben betrifft die Erfindung ein Verfahren zum Bestimmen und Bewerten von Rissen in einem Prüfgegenstand aus einem elektrisch leitfähigen Material.

Bei zahlreichen Materialprüfungen sind zerstörungsfreie Verfahren erforderlich. Beispielsweise sind die Oberflächen von Bauteilen aus Metall oftmals einer Umgebung ausgesetzt, die eine Korrosion, Oxidation, Diffusion und weitere Alterungsprozesse bewirkt. Durch mechanische Beanspruchungen können auch Risse in der Oberfläche des Bauteils verursacht werden.

Dies trifft zum Beispiel auch für die Lauf- und Leitschaufeln einer Gasturbine zu, die durch mechanische und thermische Belastungen besonders einer Rissbildung an ihrer Oberfläche ausgesetzt sind. Um in regelmäßigen Abständen den aktuellen Zustand eines solchen Schaufelrades überprüfen zu können, sind zerstörungsfreie Prüfverfahren erforderlich.

Mit der Anwendung des Wirbelstromprinzips können geeignete zerstörungsfreie Prüfverfahren durchgeführt werden. Dabei wird der Prüfgegenstand einem elektromagnetischen Wechselfeld mit einstellbarer Frequenz ausgesetzt. Dadurch werden Wirbelströme im Prüfgegenstand induziert. Das von den Wirbelströmen erzeugte elektromagnetische Feld bzw. dessen induzierte Spannung wird erfasst. Dabei kann die Amplitude und die Phasenlage der induzierten Spannung bestimmt werden.

DE 42 01 502 offenbart ein solches Verfahren, sowie EP 0 165 761 und US 4, 555, 664.

Um Risse in der Oberfläche des Bauteils ermitteln zu können, kann das Wirbelstromverfahren verwendet werden. Auch die Risstiefe kann prinzipiell mit dem Wirbelstromverfahren bestimmt werden. Es ist jedoch nicht bekannt, wie zwischen einfachen Rissen und mehreren, eng benachbarten Rissen unterschieden werden kann.

Es ist Aufgabe der Erfindung, ein verbessertes Verfahren zum Erfassen und Auswerten von Wirbelstromsignalen sowie ein verbessertes Verfahren zum Bestimmen und Bewerten von Rissen in einem elektrisch leitfähigen Bauteil bereitzustellen, das auch eine zuverlässige Unterscheidung zwischen einem einzelnen Riss und mehreren benachbarten Rissen ermöglicht.

Diese Aufgabe wird durch ein Verfahren zum Erfassen und Auswerten von Wirbelstromsignalen gemäß Patentanspruch 1 bzw. ein Verfahren zum Bestimmen und Bewerten von Rissen in einem Prüfgegenstand nach Anspruch 14 gelöst.

Der Kern der Erfindung liegt darin, dass die Oberfläche oder ein Oberflächenabschnitt des Prüfgegenstands entlang paralleler Messspuren abgetastet wird. Dadurch wird effektiv eine Fläche oder ein Flächenabschnitt des Prüfgegenstands abgetastet. Dabei werden die in dem Prüfgegenstand induzierten Wirbelströme erfasst. Die erfassten Messdaten werden mit den Messdaten benachbarter Messspuren verknüpft. Auf diese Weise können die erfassten Messdaten einer Messspur mit Berücksichtigung von Messdaten benachbarter Messspuren korrigiert werden. Ebenso können mehrdeutige Messdaten einer Messspur mit Berücksichtigung der Messdaten benachbarter Messspuren eindeutig interpretiert werden.

Vorzugsweise wird die von den Wirbelströmen induzierte Spannung erfasst. Dabei kann die Amplitude und Phase der von den Wirbelströmen induzierten Spannung erfasst werden. Risse im Prüfgegenstand führen zu lokal anderen elektrischen Eigenschaften, beispielsweise eine geringere elektrische Leitfähigkeit als das Material des Prüfgegenstands. Auf diese Weise wird die induzierte Spannung beeinflusst und die Risse werden detektiert.

Das Interpretieren der aufbereiteten Messgrößen erfolgt vorzugsweise auf der Basis eines vorbestimmten Bewertungsalgorithmus.

Beispielsweise basiert der Bewertungsalgorithmus auf einem empirisch bestimmten Regelsatz. Dazu können insbesondere Referenzmessungen an Exemplaren des Prüfgegenstands mit bekannten Eigenschaften durchgeführt und daraus Kalibrierfunktionen erstellt werden.

Alternativ oder zusätzlich kann der Bewertungsalgorithmus auf einem selbst lernenden Verfahren, insbesondere mit Verwendung eines neuronalen Netzwerkes basieren.

Messtechnisch kann zum Erfassen der Wirbelströme ein Mehrkanalsensor verwendet werden, wobei jeder Kanal einer Messspur zugeordnet wird. Mit dem Mehrkanalsensor sind mehrere Messungen gleichzeitig möglich.

Insbesondere können die parallelen Messspuren gleichzeitig abgetastet werden.

Alternativ dazu kann zum Erfassen der Wirbelströme ein Einzelsensor verwendet werden, wobei die parallelen Messspuren nacheinander abgetastet werden.

Beispielsweise wird der Prüfgegenstand mit dem elektromagnetischen Wechselfeld mit mehreren diskreten Frequenzen beaufschlagt. Da bestimmte Eigenschaften des elektrischen Wechselfeldes von der Frequenz abhängen, lassen sich dadurch zusätzlichen Informationen über den Prüfgegenstand gewinnen.

Ebenso kann der Prüfgegenstand mit dem elektromagnetischen Wechselfeld mit einem kontinuierlichen Frequenzspektrum beaufschlagt werden. Auch das Frequenzspektrum hat eine charakteristische Struktur und erlaubt Rückschlüsse auf physikalische Eigenschaften des Prüfgegenstands.

Hauptsächlich werden die synthetischen Risssignale zur Bestimmung geometrischer Eigenschaften eines oder mehrerer Risse verwendet.

Insbesondere ist vorgesehen, dass die synthetischen Risssignale zur Bestimmung der Tiefe eines oder mehrerer Risse verwendet werden. Die Tiefe des Risses ist in vielen Fällen entscheidend, ob der Prüfgegenstand erneuert oder repariert werden muss.

Weiterhin können die Wirbelstromsignale zur Bestimmung der elektrischen Leitfähigkeit verwendet werden. Auch aus der elektrischen Leitfähigkeit lassen sich indirekt Informationen über die geometrische Struktur der Risse erhalten.

Bei der bevorzugten Ausführungsform der Erfindung werden mechanische Führungsmittel verwendet, um die Bewegung des Wirbelstromsensors entlang der Messspuren auf dem Oberflächenabschnitt des Prüfgegenstands festzulegen. Auf diese Weise ist das Verfahren reproduzierbar. Insbesondere bei der Anwendung eines Einzelsensors ist eine mechanische Führung zum sicherstellen der definierten Spurabstände vorteilhaft. Es können Referenzmessungen durchgeführt werden, um beispielsweise den Bewertungsalgorithmus oder Kalibrierkurven zu bestimmen.

Dazu sind vorzugsweise die mechanischen Führungsmittel an die geometrische Form des Prüfgegenstands angepasst worden oder werden angepasst.

Insbesondere ist das Verfahren zum Bestimmen und Bewerten von Rissen an und/oder im Bereich der Oberfläche des Prüfgegenstands vorgesehen. Die Oberfläche des Prüfgegenstands ist im Betrieb besonders den mechanischen und chemischen Belastungen ausgesetzt.

Schließlich ist vorgesehen, dass das Verfahren zum Bestimmen und Bewerten von Rissen unter der Oberfläche des Prüfgegenstands im Messbereich des elektromagnetischen Wechselfeldes einzusetzen. Auch die Risse unter der Oberfläche des Prüfgegenstands beeinflussen dessen elektrische Eigenschaften und somit die Wirbelströme.

Weitere Merkmale, Vorteile und besondere Ausführungsformen der Erfindung sind Gegenstand der Unteransprüche.

Nachstehend wird das Verfahren gemäß der Erfindung in der Figurenbeschreibung anhand bevorzugter Ausführungsformen und unter Bezugnahme auf die beigefügten Zeichnungen näher erläutert. Es zeigen:
- FIG. 1: eine schematische Ansicht einer Erfassung und Auswertung von Wirbelstromsignalen gemäß der bevorzugten Ausführungsform des erfindungsgemäßen Verfahrens,
- FIG. 2: eine schematische beispielhafte graphische Darstellung aufbereiteter Messsignale nach einer Signalaufbereitung gemäß der bevorzugten Ausführungsform des erfindungsgemäßen Verfahrens vor der Anwendung des Bewertungsalgorithmus, und
- FIG. 3: eine schematische beispielhafte graphische Darstellung synthetischer Risssignale nach einer logischen Verknüpfung gemäß der bevorzugten Ausführungsform des erfindungsgemäßen Verfahrens nach der Anwendung des Bewertungsalgorithmus.

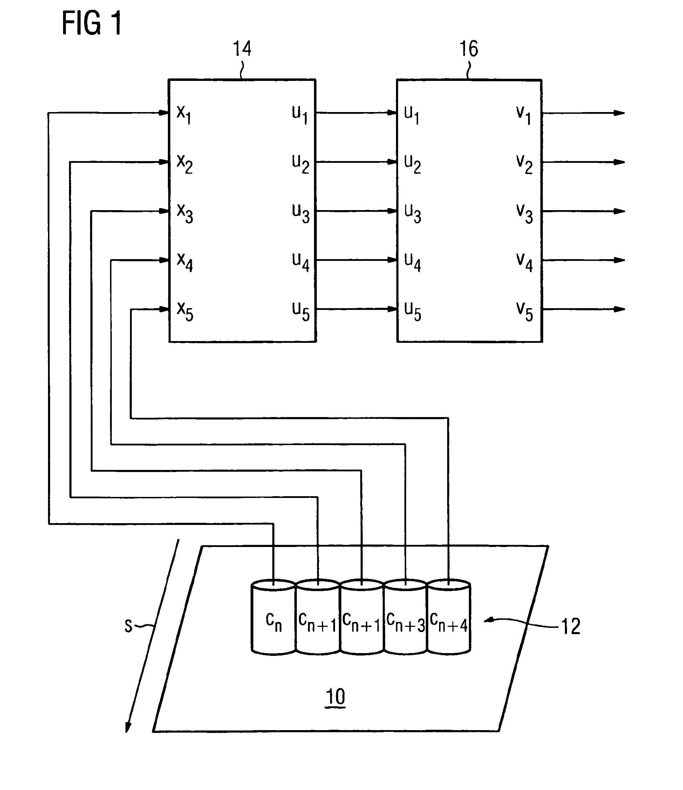

FIG. 1 zeigt schematische Ansicht einer Erfassung und Auswertung von Wirbelstromsignalen x₁, x₂, x₃, x₄ und x₅ an einem Oberflächenabschnitt 10 eines Prüfgegenstands gemäß der bevorzugten Ausführungsform des erfindungsgemäßen Verfahrens. Das Abtasten des Oberflächenabschnitts 10 des Prüfgegenstands erfolgt mit einem Wirbelstromsensors 12.

Der Prüfgegenstand wird einem elektromagnetischen Wechselfeld mit einstellbarer Frequenz f ausgesetzt. Es können eine oder mehrere bestimmte Frequenzen f vorgesehen sein. Ebenso kann ein kontinuierliches Frequenzspektrum mit vorbestimmten Grenzfrequenzen verwendet werden. Durch das elektromagnetische Wechselfeld werden Wirbelströme im Prüfgegenstand induziert. Das von den Wirbelströmen erzeugte elektromagnetische Feld bzw. dessen induzierte Spannung wird vom Wirbelstromsensor 12 erfasst.

Der Wirbelstromsensor 12 kann entweder als ein Einkanalsensor oder als ein Mehrkanalsensor ausgebildet sein. Bei dieser konkreten Ausführungsform ist der Wirbelstromsensor 12 als Mehrkanalsensor ausgebildet und umfasst fünf Kanäle cₙ, cₙ₊₁, cₙ₊₂, cₙ₊₃ und cₙ₊₄. Durch die Bewegung des Wirbelstromsensors 12 entlang der Bewegungsrichtung wird jedem Einzelsensor eine Messspur zugeordnet. Die Messspuren sind parallel zueinander auf dem Oberflächenabschnitt 10 angeordnet. Ebenso ist jeder der Kanäle cₙ, cₙ₊₁, cₙ₊₂, cₙ₊₃ und cₙ₊₄ jeweils einer Messspur zugeordnet.

Bei der alternativen Verwendung des Einkanalsensors werden mit demselben Sensor die parallel verlaufenden Messspuren auf dem Oberflächenabschnitt 10 nacheinander abgetastet.

Die Wirbelstromsignale x₁, x₂, x₃, x₄ und x₅ der einzelnen Kanäle cₙ, cₙ₊₁, cₙ₊₂, cₙ₊₃ und cₙ₊₄ werden in einer Signalaufbereitung 14 und anschließend in einer logischen Verknüpfung 16 verarbeitet.

Zunächst werden die Wirbelstromsignale x₁, x₂, x₃, x₄ und x₅ der einzelnen Kanäle cₙ, cₙ₊₁, cₙ₊₂, cₙ₊₃ und cₙ₊₄ der Signalaufbereitung 14 unterzogen. Bei der Signalaufbereitung 14 werden für jeden Kanal cₙ, cₙ₊₁, cₙ₊₂, cₙ₊₃ und cₙ₊₄ aufbereitete Messgrößen u₁, u₂, u₃, u₄ und u₅ erzeugt. Die aufbereiteten Messgrößen u₁, u₂, u₃, u₄ und u₅ sind Funktionen des Kanals cₙ, cₙ₊₁, cₙ₊₂, cₙ₊₃ und cₙ₊₄, der Frequenz f und einer Messposition s. Die Messposition s definiert einen Punkt auf der jeweiligen Messspur.

Die Signalaufbereitung 14 der Wirbelstromsignale x₁, x₂, x₃, x₄ und x₅ erfolgt für jeden Kanal cₙ, cₙ₊₁, cₙ₊₂, cₙ₊₃ und cₙ₊₄ und für jede Frequenz f separat.

In der anschließenden logischen Verknüpfung 16 werden die aufbereiteten Messgrößen u₁, u₂, u₃, u₄ und u₅ nach vorbestimmten Kriterien interpretiert.

Dabei wird für jede Messposition s der Wert einer oder mehrerer ausgewählter aufbereiteter Messgrößen u₁, u₂, u₃, u₄ und u₅ mit dem der Nachbarpositionen verglichen. Darüber hinaus kann der Wert der ausgewählten aufbereiteten Messgrößen u₁, u₂, u₃, u₄ und u₅ mit denen der Nachbarpositionen für verschiedene Frequenzen f verglichen werden.

Durch Anwendung des Bewertungsalgorithmus auf der Basis eines empirisch ermittelten Regelsatzes oder über einen selbstlernenden Ansatz werden dabei synthetische Risssignale v₁, v₂, v₃, v₄ und v₅ erzeugt. Bei den synthetischen Risssignalen v₁, v₂, v₃, v₄ und v₅ werden die Zuordnung zu der Prüfspur cₙ und die Amplitude korrigiert. Die auf diese Weise korrigierten Risssignale v₁, v₂, v₃, v₄ und v₅ verbessern die Aussage zu Lage und Anzahl der Risse und können zur Bestimmung der Tiefe des Risses verwendet werden.

Durch das Abtasten des Oberflächenabschnitts 10 des Prüfgegenstands wird eine Liniendarstellung oder Flächendarstellung der Wirbelstromsignale x₁, x₂, x₃, x₄ und x₅ erzeugt. Die Wirbelstromsignale x₁, x₂, x₃, x₄ und x₅ sind somit eine Funktion der Position s entlang der Messspur oder einer Position auf dem Oberflächenabschnitt 10.

Es ist eine mechanische Führungseinrichtung vorgesehen, um den Wirbelstromsensor 12 entlang der vorbestimmten Messspur reproduzierbar zu bewegen.

Die Verwendung mehrerer Frequenzen f ermöglicht zusätzliche Informationen über die Eigenschaften des Risses, da mehrere elektromagnetische Größen von der Frequenz abhängig sind. Der Prüfgegenstand kann gleichzeitig oder hintereinander mit verschiedenen Frequenzen f beaufschlagt werden.

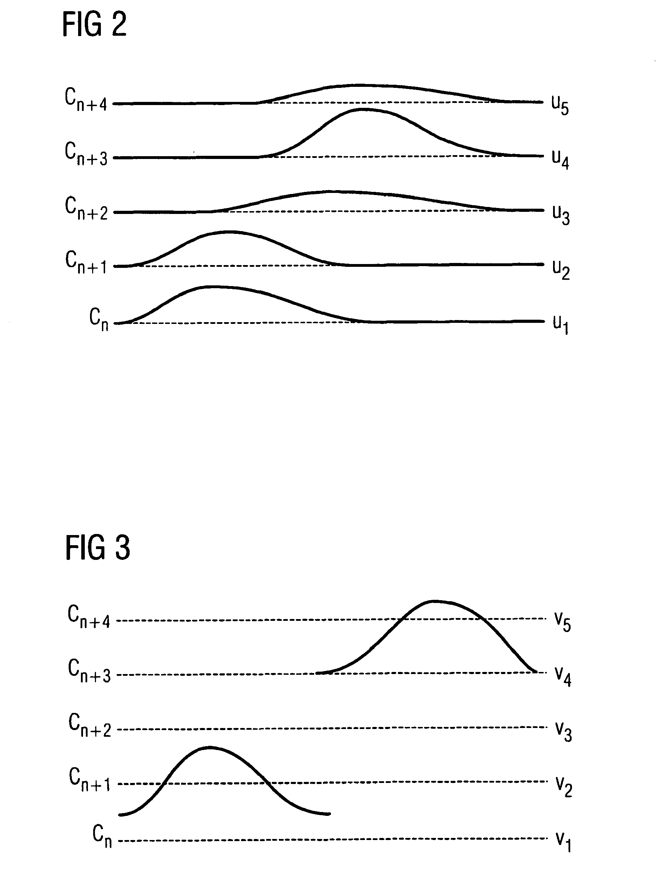

FIG. 2 zeigt eine schematische beispielhafte graphische Darstellung der aufbereiteten Messgrößen u₁, u₂, u₃, u₄ und u₅ nach der Signalaufbereitung 12 und vor der logischen Verknüpfung 16 gemäß der bevorzugten Ausführungsform des erfindungsgemäßen Verfahrens. Die aufbereiteten Messgrößen u₁, u₂, u₃, u₄ und u₅ gehen jeweils aus den entsprechenden Wirbelstromsignalen x₁, x₂, x₃, x₄ und x₅ hervor.

Die Signalaufbereitung 14 der Wirbelstromsignale x₁, x₂, x₃, x₄ und x₅ erfolgt für jeden Kanal cₙ, cₙ₊₁, cₙ₊₂, cₙ₊₃ und cₙ₊₄ und für jede Frequenz f separat. Bei der Signalaufbereitung 14 werden für jeden Kanal cₙ, cₙ₊₁, cₙ₊₂, cₙ₊₃ und cₙ₊₄ die entsprechenden aufbereiteten Messgrößen u₁, u₂, u₃, u₄ und u₅ erzeugt. Die resultierenden aufbereiteten Messgrößen u₁, u₂, u₃, u₄ und u₅ sind Funktionen des Kanals cₙ, cₙ₊₁, cₙ₊₂, cₙ₊₃ und cₙ₊₄, der Frequenz f und einer Messposition s.

FIG. 3 zeigt eine schematische beispielhafte graphische Darstellung der synthetischen Risssignale v₁, v₂, v₃, v₄ und v₅ nach der logischen Verknüpfung 16 gemäß der bevorzugten Ausführungsform des Verfahrens. Die synthetischen Risssignale v₁, v₂, v₃, v₄ und v₅ gehen aus den aufbereiteten Messgrößen u₁, u₂, u₃, u₄ und u₅ hervor. Bei der Bestimmung des synthetischen Risssignals v₃ wird die entsprechende aufbereitete Messgröße u₃ und zumindest auch die benachbarten aufbereiteten Messgrößen u₂ und u₄ verwendet. Die Bewertung der benachbarten aufbereiteten Messgrößen u₁ und u₅ führt zu dem Ergebnis eines zwischen den Kanälen positionierten Einzelsignals.

Das erfindungsgemäße Verfahren ist eine besonders effiziente Methode, um sowohl Risse in der Oberfläche des Prüfgegenstands festzustellen und zu bewerten. Darüber hinaus können weitere geometrische Eigenschaften der Risse bestimmt werden indem festgestellt wird, ob es sich um einen einzigen Riss oder um zwei oder mehrere nebeneinander liegende Risse handelt.

## Patentansprüche

1. Verfahren zum Erfassen und Auswerten von Wirbelstromsignalen in einem Prüfgegenstand aus einem elektrisch leitfähigen Material, wobei das Verfahren die folgenden Schritte aufweist:
- Beaufschlagen des Prüfgegenstands mit einem elektromagnetischen Wechselfeld mit vorbestimmter konstanter oder variabler Frequenz (f),
- Erfassen der in dem Prüfgegenstand induzierten Wirbelströme entlang vorbestimmter paralleler Messspuren (cₙ, cₙ₊₁, cₙ₊₂, cₙ₊₃, cₙ₊₄) auf einem Oberflächenabschnitt (10) des Prüfgegenstands,
- Bereitstellen von Wirbelstromsignalen (x₁, x₂, x₃, x₄, x₅), wobei jedes Wirbelstromsignal (x₁, x₂, x₃, x₄, x₅) zugeordnet ist,
- Aufbereiten (14) der Wirbelstromsignale (x₁, x₂, x₃, x₄, x₅) und Bereitstellen von aufbereiteten Messgrößen (u₁, u₂, u₃, u₄, u₅) als Funktion der Messspur (cₙ, cₙ₊₁, cₙ₊₂, cₙ₊₃, cₙ₊₄), der Frequenz (f) und einer Position (s) entlang der Messspur (cₙ, cₙ₊₁, cₙ₊₂, cₙ₊₃, cₙ₊₄),
- Interpretieren (16) der aufbereiteten Messgrößen (u₁, u₂, u₃, u₄, u₅) nach vorbestimmten Kriterien, wobei die Interpretation einer oder mehrere ausgewählter aufbereiteter Messgrößen (u₁, u₂, u₃, u₄, u₅) unter Verwendung von aufbereiteten Messgrößen (u₁, u₂, u₃, u₄, u₅) wenigstens einer benachbarten Messspur (cₙ, cₙ₊₁, cₙ₊₂, cₙ₊₃, cₙ₊₄) erfolgt und wobei synthetische Risssignale (vᵢ, v₂, v₃, v₄, v₅) erzeugt werden, und
- Korrigieren der Amplitude und/oder der Zuordnung der synthetischen Risssignale (v₁, v₂, v₃, v₄, v₅) zu einer Messspur (cₙ, cₙ₊₁, cₙ₊₂, cₙ₊₃, cₙ₊₄) gegenüber den aufbereiteten Messgrößen (u₁, u₂, u₃, u₄, u₅).

2. Verfahren nach Anspruch 1,
**dadurch gekennzeichnet, dass**
die Amplitude und Phase der durch ein magnetisches Wechselfeld induzierten Wirbelströme erfasst wird.

3. Verfahren nach Anspruch 1 oder 2,
**dadurch gekennzeichnet, dass**
das Interpretieren (16) der aufbereiteten Messgrößen (u₁, u₂, u₃, u₄, u₅) auf der Basis eines vorbestimmten Bewertungsalgorithmus erfolgt.

4. Verfahren nach Anspruch 3,
**dadurch gekennzeichnet, dass**
der Bewertungsalgorithmus auf einem empirisch bestimmten Regelsatz basiert.

5. Verfahren nach Anspruch 3 oder 4,
**dadurch gekennzeichnet, dass**
der Bewertungsalgorithmus auf einem selbst lernenden Verfahren, insbesondere mit Verwendung eines neuronalen Netzwerkes basiert.

6. Verfahren nach einem der vorhergehenden Ansprüche,
**dadurch gekennzeichnet, dass**
zum Erfassen der Wirbelströme ein Mehrkanalsensor (12) verwendet wird, wobei jeder Kanal (cₙ, cₙ₊₁, cₙ₊₂, cₙ₊₃, cₙ₊₄) einer Messspur zugeordnet wird.

7. Verfahren nach Anspruch 6,
**dadurch gekennzeichnet, dass**
die parallelen Messspuren (cₙ, cₙ₊₁, cₙ₊₂, cₙ₊₃, cₙ₊₄) gleichzeitig abgetastet werden.

8. Verfahren nach einem der Ansprüche 1 bis 5,
**dadurch gekennzeichnet, dass**
zum Erfassen der Wirbelströme ein Einzelsensor verwendet wird, wobei die parallelen Messspuren (cₙ, cₙ₊₁, cₙ₊₂, cₙ₊₃, cₙ₊₄) nacheinander abgetastet werden.

9. Verfahren nach einem der vorhergehenden Ansprüche,
**dadurch gekennzeichnet, dass**
der Prüfgegenstand mit dem elektromagnetischen Wechselfeld mit mehreren diskreten Frequenzen (f) beaufschlagt wird.

10. Verfahren nach einem der vorhergehenden Ansprüche,
**dadurch gekennzeichnet, dass**
der Prüfgegenstand mit dem elektromagnetischen Wechselfeld mit einem kontinuierlichen Frequenzspektrum beaufschlagt wird.

11. Verfahren nach einem der vorhergehenden Ansprüche,
**dadurch gekennzeichnet, dass**
die Wirbelstromsignale (x₁, x₂, x₃, x₄, x₅) zur Bestimmung der elektrischen Leitfähigkeit verwendet werden.

12. Verfahren nach einem der Ansprüche 6 bis 11,
**dadurch gekennzeichnet, dass**
mechanische Führungsmittel verwendet werden, um die Bewegung des Wirbelstromsensor (12) entlang der Messspuren auf dem Oberflächenabschnitts (10) des Prüfgegenstands festzulegen.

13. Verfahren nach Anspruch 12,
**dadurch gekennzeichnet, dass**
die mechanischen Führungsmittel an die geometrische Form des Prüfgegenstands angepasst worden sind oder werden.

14. Verfahren zum Bestimmen und Bewerten von Rissen in einem Prüfgegenstand aus einem elektrisch leitfähigen Material
**dadurch gekennzeichnet, dass**
Wirbelstromsignale nach einem der vorhergehenden Ansprüche erfasst und ausgewertet werden und
die synthetischen Risssignale (v₁, v₂, v₃, v₄, v₅) zum Bestimmen und Bewerten von Rissen in einem Prüfgegenstand verwendet werden.

15. Verfahren nach Anspruch 14,
**dadurch gekennzeichnet, dass**
die synthetischen Risssignale (v₁, v₂, v₃, v₄, v₅) zur Bestimmung geometrischer Eigenschaften von einem oder mehreren Rissen verwendet werden und/oder
die synthetischen Risssignale (v₁, v₂, v₃, v₄, v₅) zur Bestimmung der Tiefe eines oder mehrerer Risse verwendet werden.

16. Verfahren nach Anspruch 14 oder Anspruch 15,
**dadurch gekennzeichnet, dass**
das Verfahren zum Bestimmen und Bewerten von Rissen an und/oder im Bereich der Oberfläche des Prüfgegenstands vorgesehen ist.

17. Verfahren nach einem der Ansprüche 14 bis 16,
**dadurch gekennzeichnet, dass**
das Verfahren zum Bestimmen und Bewerten von Rissen unter der Oberfläche des Prüfgegenstands vorgesehen ist.

## Claims

1. Method for detecting and evaluating eddy-current signals in a test object made from an electrically conductive material, the method having the following steps:
- applying an alternating electromagnetic field of a predetermined constant or variable frequency (f) to the test object,
- detecting the eddy-currents induced in the test object along predetermined parallel measuring tracks (cₙ, cₙ₊₁, cₙ₊₂, cₙ₊₃, cₙ₊₄) on a surface portion (10) of the test object,
- providing eddy-current signals (x₁, x₂, x₃, _{X4}, x₅), each eddy-current signal (x₁, x₂, x₃, x₄, x₅) being assigned,
- conditioning (14) the eddy-current signals (x₁, x₂, x₃, x₄, x₅) and providing conditioned measured variables (u₁, u₂, u₃, u₄, u₅) as a function of the measuring track (cₙ, cₙ₊₁, Cₙ₊₂, cₙ₊₃, cₙ₊₄), the frequency (f) and a position (s) along the measuring track (cₙ, cₙ₊₁, cₙ₊₂, cₙ₊₃, cₙ₊₄),
- interpreting (16) the conditioned measured variables (u₁, u₂, u₃, u₄, u₅) according to predetermined criteria, one or more selected conditioned measured variables (u₁, u₂, u₃, u₄, u₅) being interpreted with the use of conditioned measured variables (u₁, u₂, u₃, u₄, u₅) of at least one adjacent measuring track (cₙ, cₙ₊₁, cₙ₊₂, cₙ₊₃, cₙ₊₄) and synthetic crack signals (v₁, v₂, v₃, v₄, v₅) being generated and,
- correcting the amplitude and/or the assignment of the synthetic crack signals (v₁, v₂, v₃, v₄, v₅) relating to a measuring track (cₙ, cₙ₊₁, cₙ₊₂, cₙ₊₃, cₙ₊₄) by comparison with the conditioned measured variables (u₁, u₂, u₃, u₄, u₅).

2. Method according to Claim 1, **characterized in that** the amplitude and phase of the eddy-currents induced by an alternating magnetic field are detected.

3. Method according to Claim 1 or 2, **characterized in that** the conditioned measured variables (u₁, u₂, u₃, u₄, u₅) are interpreted (16) on the basis of a predetermined evaluation algorithm.

4. Method according to Claim 3, **characterized in that** the evaluation algorithm is based on an empirically determined set of rules.

5. Method according to Claim 3 or 4, **characterized in that** the evaluation algorithm is based on a self learning method, in particular with the use of a neural network.

6. Method according to one of the preceding claims, **characterized in that** a multichannel sensor (12) is used to detect the eddy-currents, each channel (cₙ, cₙ₊₁, cₙ₊₂, cₙ₊₃, cₙ₊₄) being assigned to a measuring track.

7. Method according to Claim 6, **characterized in that** the parallel measuring tracks (cₙ, cₙ₊₁, cₙ₊₂, cₙ₊₃, cₙ₊₄) are scanned simultaneously.

8. Method according to one of Claims 1 to 5, **characterized in that** a single sensor is used to detect the eddy-currents, the parallel measuring tracks (cₙ, cₙ₊₁, cₙ₊₂, cₙ₊₃, cₙ₊₄) being scanned sequentially.

9. Method according to one of the preceding claims, **characterized in that** the alternating electromagnetic field is applied with a plurality of discrete frequencies (f) to the test object.

10. Method according to one of the preceding claims, **characterized in that** the alternating electromagnetic field is applied with a continuous frequency spectrum to the test object.

11. Method according to one of the preceding claims, **characterized in that** the eddy-current signals (x₁, x₂, x₃, x₄, x₅) are used to determine the electrical conductivity.

12. Method according to one of Claims 6 to 11, **characterized in that** mechanical guide means are used in order to establish the movement of the eddy-current sensor (12) along the measuring tracks on the surface portion (10) of the test object.

13. Method according to Claim 12, **characterized in that** the mechanical guide means have been or are adapted to the geometric shape of the test object.

14. Method for determining and evaluating cracks in a test object made from an electrically conductive material, **characterized in that** eddy-current signals are detected and evaluated according to one of the preceding claims and the synthetic crack signals (v₁, v₂, v₃, v₄, v₅) are used to determine and evaluate cracks in a test object.

15. Method according to Claim 14, **characterized in that** the synthetic crack signals (v₁, v₂, v₃, v₄, v₅) are used to determine geometric properties of one or more cracks and/or the synthetic crack signals (v₁, v₂, v₃, v₄, v₅) are used to determine the depth of one or more cracks.

16. Method according to Claim 14 or Claim 15, **characterized in that** the method is provided for determining and evaluating cracks on and/or in the region of the surface of the test object.

17. Method according to Claims 14 to 16, **characterized in that** the method is provided for determining and evaluating cracks below the surface of the test object.

## Revendications

1. Procédé de détection d'exploitation de signaux de courants de Foucault dans un objet à contrôler en un matériau conducteur de l'électricité, le procédé ayant les stades suivantes :
- on soumet l'objet à contrôler à un champ alternatif électromagnétique ayant une fréquence ( f ) déterminée à l'avance constante ou variable,
- on détecte les courants de Foucault induits dans l'objet à contrôler le long de pistes ( Cₙ, Cₙ₊₁, Cₙ₊₂, Cₙ₊₃, Cₙ₊₄ ) de mesure parallèles déterminées à l'avance sur un segment (10) de surface de l'objet à contrôler,
- on se procure des signaux ( x₁, x₂, x₃, x₄, x₅ ) de courants de Foucault, chaque signal ( x₁, x₂, x₃, x₄, x₅ ) de courants de Foucault étant affecté,
- on traite ( 14 ) les signaux ( x₁, x₂, x₃, x₄, x₅ ) de courants de Foucault et on se procure des grandeurs ( u₁, u₂, u₃, u₄, u₅ ) de mesure traitées en fonction de la piste ( Cₙ, Cₙ₊₁, Cₙ₊₂, Cₙ₊₃, Cₙ₊₄ ) de mesure, de la fréquence ( f ) et d'une position (s) le long de la piste ( Cₙ, Cₙ₊₁, Cₙ₊₂, Cₙ₊₃, Cₙ₊₄ ) de mesure,
- on interprète ( 16 ) les grandeurs ( u₁, u₂, u₃, u₄, u₅ ) de mesure traitées suivant des critères déterminés à l'avance, l'interprétation d'une ou de plusieurs grandeurs ( u₁, u₂, u₃, u₄, u₅ ) de mesure traitées sélectionnées s'effectuant en utilisant des grandeurs ( u₁, u₂, u₃, u₄, u₅ ) de mesure traitées d'au moins une piste ( Cₙ, Cₙ₊₁, Cₙ₊₂, Cₙ₊₃, Cₙ₊₄ ) de mesure voisine et des signaux ( v₁ v₂, v₃, v₄, v₅ ) synthétiques de fissures étant produits, et
- on corrige les amplitudes et/ou l'affectation des signaux ( v₁, v₂, v₃, v₄, v₅ ) synthétiques de fissures à une piste ( Cₙ, Cₙ₊₁, Cₙ₊₂, Cₙ₊₃, Cₙ₊₄ ) de mesure par rapport aux grandeurs ( u₁, u₂, u₃, u₄, u₅ ) de mesure traitées.

2. Procédé suivant la revendication 1,
**caractérisé en ce que**
on détecte l'amplitude et la phase des courants de Foucault induits par un champ alternatif magnétique.

3. Procédé suivant la revendication 1 ou 2,
**caractérisé en ce que**
on effectue l'interprétation ( 16 ) des grandeurs ( u₁, u₂, u₃, u₄, u₅ ) de mesure traitées sur la base d'un algorithme d'évaluation déterminé à l'avance.

4. Procédé suivant la revendication 3,
**caractérisé en ce que**
l'algorithme d'évaluation repose sur un jeu de règles déterminé de manière empirique.

5. Procédé suivant la revendication 3 ou 4,
**caractérisé en ce que**
l'algorithme d'évaluation repose sur un procédé d'autoapprentissage, en utilisant notamment un réseau neuronal.

6. Procédé suivant l'une des revendications précédentes,
**caractérisé en ce que**
pour la détection des courants de Foucault, on utilise un capteur ( 12 ) à plusieurs canaux, chaque canal ( Cₙ, Cₙ₊₁, Cₙ₊₂, Cₙ₊₃, Cₙ₊₄ ) étant affecté à une piste de mesure.

7. Procédé suivant la revendication 6,
**caractérisé en ce que**
on échantillonne simultanément les pistes ( Cₙ, Cₙ₊₁, Cₙ₊₂, Cₙ₊₃, Cₙ₊₄ ) de mesure parallèles.

8. Procédé suivant l'une des revendications 1 à 5,
**caractérisé en ce que**
pour la détection des courants de Foucault, on utilise un capteur individuel, les pistes ( Cₙ, Cₙ₊₁, Cₙ₊₂, Cₙ₊₃, Cₙ₊₄ ) de mesure parallèles étant échantillonnées les unes après les autres.

9. Procédé suivant l'une des revendications précédentes,
**caractérisé en ce que**
on soumet l'objet à contrôler au champ alternatif électromagnétique ayant plusieurs fréquences ( f ) discrètes.

10. Procédé suivant l'une des revendications précédentes,
**caractérisé en ce que**
on soumet l'objet à contrôler au champ alternatif électromagnétique ayant un spectre de fréquence continu.

11. Procédé suivant l'une des revendications précédentes,
**caractérisé en ce que**
on utilise les signaux ( x₁, x₂, x₃, x₄, x₅ ) de courants de Foucault pour la détermination de la conductivité électrique.

12. Procédé suivant l'une des revendications 6 à 11,
**caractérisé en ce que**
on utilise des moyens mécaniques de guidage pour fixer le mouvement du capteur ( 12 ) de courants de Foucault le long des pistes de mesure sur la section ( 10 ) de surface de l'objet à contrôler.

13. Procédé suivant la revendication 12,
**caractérisé en ce que**
on adapte ou on a adapté des moyens mécaniques de guidage à la forme géométrique de l'objet à contrôler.

14. Procédé de détermination et d'évaluation de fissures dans un objet à contrôler en un matériau conducteur de l'électricité,
**caractérisé en ce que**
on détecte et on exploite des signaux de courants de Foucault suivant l'une des revendications précédentes et
on utilise les signaux ( v₁, v₂, v₃, v₄, v₅ ) synthétiques de fissures pour la détermination et l'évaluation de fissures dans un objet à contrôler.

15. Procédé suivant la revendication 14,
**caractérisé en ce que**
on utilise les signaux ( v₁, v₂, v₃, v₄, v₅ ) synthétiques de fissures pour la détermination de propriétés géométriques d'une ou de plusieurs fissures et/ou
on utilise les signaux ( v₁, v₂, v₃, v₄, v₅ ) synthétiques de fissures pour la détermination de la profondeur d'une fissure ou de plusieurs fissures.

16. Procédé suivant la revendication 14 ou la revendication 15,
**caractérisé en ce que**
le procédé est prévu pour la détermination et l'évaluation de fissures sous et/ou dans une partie de la surface de l'objet à contrôler.

17. Procédé suivant l'une des revendications 14 à 16,
**caractérisé en ce que**
le procédé est prévu pour la détermination et l'évaluation de fissures sur la surface de l'objet à contrôler.
